Europäisches Patentamt

European Patent Office

Office européen des brevets

(11) Numéro de publication: **0 258 097**
**A1**

## (12) DEMANDE DE BREVET EUROPEEN

(21) Numéro de dépôt: 87401735.3

(22) Date de dépôt: 24.07.87

(51) Int. Cl.⁴: **B 60 H 1/00**

(30) Priorité: 06.08.86 FR 8611399

(43) Date de publication de la demande:
02.03.88 Bulletin 88/09

(84) Etats contractants désignés: DE IT

(71) Demandeur: **VALEO**
**64 Avenue de la Grande Armée**
**F-75017 Paris (FR)**

(72) Inventeur: **Bouvot, Jean-François**
**2, Rue des Grands-Prés Le Mesnil Sévin**
**F-78720 Dampierre (FR)**

(74) Mandataire: **Lemaire, Marc**
**VALEO Département Propriété Industrielle 30, rue**
**Blanqui**
**F-93406 Saint-Ouen (FR)**

(54) **Dispositif d'aération et de chauffage par air chaud.**

(57) Dispositif d'aération et de chauffage de l'habitacle d'un véhicule, du type dans lequel une position, dite "bi-level" ou stratification de température, d'un volet de mixage (109) permet d'obtenir des flux d'air à des températures différentes dans différentes conduites de sortie (102, 103, 104).

Selon l'invention, un volet déflecteur (110) permet de faire varier la différence de température entre les flux d'air sortant du dispositif.

FIG. 7

## Description

Dispositif d'aération et de chauffage par air chaud.

L'invention concerne un dispositif d'aération et de chauffage par air chaud, du type comprenant :
- une conduite d'entrée d'air froid;
- au moins une première conduite de sortie d'air et une seconde conduite de sortie d'air;
- une branche de transmission d'air froid interposée entre la conduite d'entrée et les conduites de sortie;
- une branche de réchauffage d'air interposée entre la conduite d'entrée et les conduites de sortie et contenant un échangeur de chaleur, la branche de transmission d'air froid et la branche de réchauffage d'air communiquant entre elles par une zone de mixage, et
- un volet de mixage disposé à la jonction de la conduite d'entrée et des branches de transmission d'air froid et de réchauffage d'air pour faire varier la répartition entre ces deux branches du débit d'air arrivant par la conduite d'entrée et par conséquent la température de l'air sortant par les conduites de sortie, l'air froid passant par la branche de transmission et l'air réchauffé dans la branche de réchauffage d'air étant pour au moins une position intermédiaire du volet de mixage dirigés préférentiellement vers la première conduite de sortie et vers la seconde conduite de sortie respectivement de façon à établir une différence de température de l'air entre ces conduites.

De tels dispositifs sont utilisés pour l'aération et le chauffage par air chaud de l'habitacle des véhicules automobiles. Ils envoient de l'air froid ou réchauffé en particulier vers des aérateurs situés au niveau du tableau de bord, vers le pare-brise pour le désembuage ou le dégivrage de celui-ci et vers la partie inférieure de l'habitacle.

Le volet de mixage permet de faire varier la température de l'air sortant du dispositif sans modifier le débit de l'eau circulant dans le radiateur qui constitue l'échangeur de chaleur. Lorsque cette eau chaude est de l'eau de refroidissement du moteur, ce maintien du débit évite d'affecter les conditions de refroidissement du moteur.

L'acheminement préférentiel de l'air froid et de l'air réchauffé vers différentes sorties permet, lorsque de l'air chaud est envoyé à la partie inférieure de l'habitacle, de faire parvenir de l'air plus frais aux aérateurs, de façon à améliorer le confort du conducteur. Cette fonction est obtenue pour une position intermédiaire déterminée du volet de mixage, dite "bi-level" ou stratification de température.

Le but de l'invention est de perfectionner le dispositif défini ci-dessus pour permettre un réglage de la différence de température entre les courants d'air sortant du dispositif en position "bi-level" ou stratification de température.

Ce but est atteint selon l'invention grâce à un déflecteur situé au voisinage de la jonction entre les branches de transmission d'air froid et de réchauffage d'air et les conduites de sortie et au voisinage de la zone de mixage, et dont le déplacement permet, lorsque le volet de mixage est dans ladite position intermédiaire, de faire passer un débit réglable d'air de la branche de transmission d'air froid à la seconde conduite de sortie et/ou de la branche de réchauffage d'air à la première conduite de sortie.

L'invention s'applique notamment à un dispositif dans lequel le volet de mixage se déplace entre une position de fermeture de la branche de transmission d'air froid permettant d'envoyer de l'air plus chaud dans les conduites de sortie et une position de fermeture de la branche de réchauffage d'air permettant d'envoyer de l'air plus froid dans les conduites de sortie.

Selon une caractéristique de l'invention, le déflecteur est un volet pivotant autour d'un axe transversal à la direction générale de l'écoulement de l'air dans le dispositif. Le volet déflecteur peut s'étendre indifféremment vers l'aval ou vers l'amont à partir de son axe de pivotement, le déflecteur pouvant être placé en aval ou en amont de la zone de mixage. Les termes "aval" et "amont" se réfèrent bien entendu au sens d'écoulement de l'air dans le dispositif.

Selon un mode de mise en oeuvre de l'invention, la branche de réchauffage d'air présente une configuration en U et la branche de transmission d'air froid s'étend de façon directe entre les extrémités du U. Il est avantageux que le volet de mixage pivote autour d'un axe adjacent à l'échangeur de chaleur et se prolonge au-delà de cet axe de façon à obturer également l'extrémité aval de la branche en U dans la position de fermeture de la branche de réchauffage d'air.

Selon une autre caractéristique avantageuse, le volet de mixage coopère, au voisinage de sa position de fermeture de la branche de transmission d'air froid, avec une portion de paroi de la conduite d'entrée s'étendant à peu près circonférentiellement par rapport au pivotement de ce volet.

D'autres caractéristiques de l'invention ressortiront de la description détaillée donnée ci-après de quelques exemples de réalisation et des dessins annexés dans lesquels :
- les figures 1, 2 et 3 sont des représentations schématiques d'un premier exemple de dispositif selon l'invention dans trois états différents;
- les figures 4, 5 et 6 sont des vues analogues à la figure 1, relatives à des variantes;
- la figure 7 est une représentation schématique d'un autre dispositif selon l'invention.

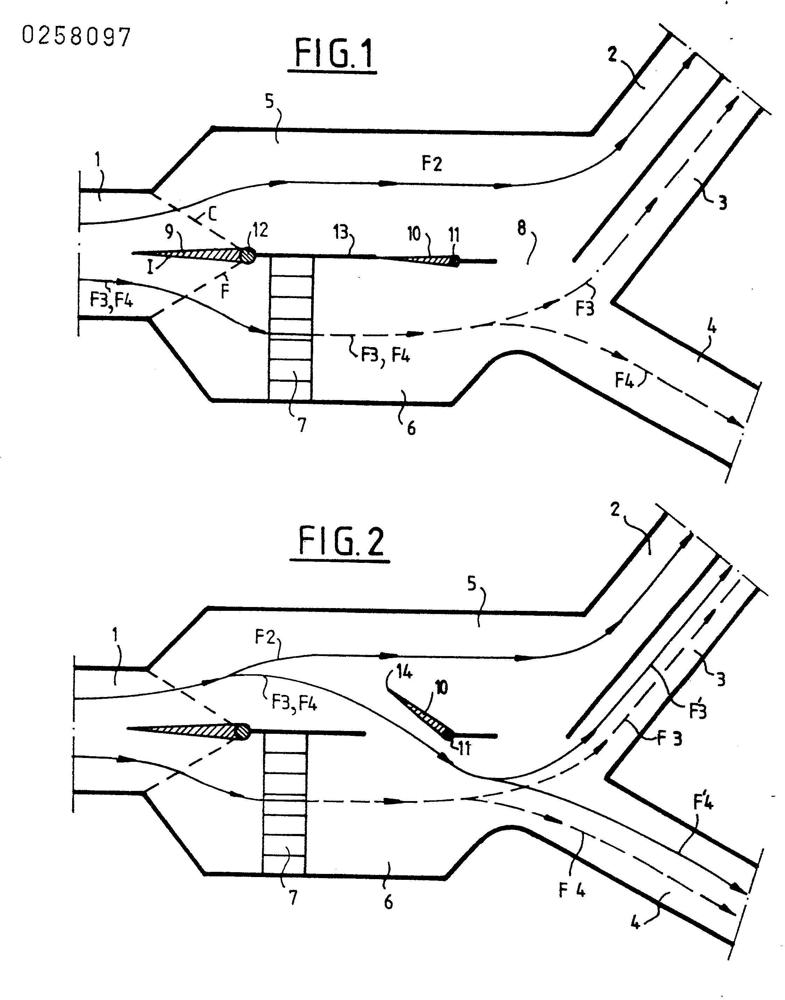

Le dispositif représenté schématiquement à la figure 1 est destiné à l'aération et au chauffage par air chaud d'un véhicule automobile. Il comprend une conduite d'entrée d'air froid 1 amenant de l'air froid de l'extérieur de l'habitacle et trois conduites de sortie d'air 2, 3 et 4 envoyant de l'air dans différentes parties de l'habitacle. La conduite 2 dessert des aérateurs de tableau de bord. La conduite 3 transporte de l'air destiné à balayer la surface interne du pare-brise en vue du désembuage ou du dégivrage de celui-ci. Enfin, l'air sortant par la conduite 4 est acheminé vers la partie basse de l'habitacle.

La conduite d'entrée d'une part et les conduites de sortie d'autre part sont reliées par deux chambres 5 et 6 formant des branches en grande partie séparées pour la circulation de l'air à l'intérieur du dispositif. La branche 5 permet la transmission directe de l'air froid arrivant par la conduite 1 vers les conduites de sortie, tandis qu'un ra diateur 7 parcouru par de l'eau chaude ayant servi au refroidissement du moteur du véhicule s'étend en travers de la branche 6, de telle sorte que l'air circulant dans celle-ci est réchauffé par passage à travers ledit échangeur. Un volet pivotant 9, dit "volet de mixage", disposé à la jonction de la conduite d'entrée et des branches 5 et 6, permet de faire varier en fonction inverse l'une de l'autre les sections d'entrée des chambres 5 et 6 et, par suite, les fractions, parvenant dans ces chambres, du débit d'air provenant de la conduite 1. Pour la position intermédiaire I du volet 9 représentée en trait plein, le débit d'air arrivant par la conduite d'entrée est partagé entre les branches 5 et 6. Lorsque le volet 9 pivote vers le haut autour de son axe 12, le débit d'air dans la branche 5 diminue et le débit d'air dans la branche 6 augmente corrélativement jusqu'à une position extrême C de fermeture de la branche 5 pour laquelle l'air passe exclusivement dans la branche 6. Inversement, lorsque le volet 9 pivote vers le bas, le débit dans la chambre 5 augmente et le débit dans la chambre 6 diminue progressivement jusqu'à la fermeture de cette dernière pour une position extrême F.

L'extrémité amont de la conduite de sortie 2 coïncide avec l'extrémité aval de la branche de transmission d'air froid 5, et l'extrémité amont des conduites de sortie 3 et 4 coïncide avec l'extrémité aval de la branche de réchauffage d'air 6. Il en résulte que, lorsque le volet 9 est dans la position intermédiaire I, dite position "bi-level" ou stratification de température, un flux d'air froid $F_2$, représenté par un trait plein, s'écoule de la canalisation d'entrée 1 à la canalisation de sortie 2 par l'intermédiaire de la branche 5. Un flux d'air froid $F_3$, $F_4$, également représenté en trait plein, passe de la canalisation d'entrée 1 à la branche 6 où il traverse le radiateur 7. Ainsi réchauffé et représenté en trait interrompu, il se partage en un flux $F_3$ qui s'engage dans la conduite de sortie 3 et en un flux $F_4$ qui passe dans la conduite de sortie 4. Ainsi, de l'air chaud est envoyé vers le pare-brise et à la partie inférieure de l'habitacle par les conduites 3 et 4, tandis que de l'air frais est envoyé aux aérateurs de tableau de bord par la conduite 2.

Lorsque le volet 9 est dans une autre position que la position I, une turbulence se produit dans les chambres 5 et 6. Il en résulte un mélange des flux d'air froid et d'air réchauffé dans une zone de mixage 8 formée par une interruption de la paroi 13 séparant les branches 5 et 6 en aval du radiateur 7, et plus précisément immédiatement en amont des conduites de sortie. Celles-ci reçoivent donc de l'air à une température sensiblement uniforme et qui dépend de la position du volet 9. Ce mélange des flux existe également, mais à un plus faible degré, dans la position I du volet, permettant l'obtention d'une différence de température importante entre les flux d'air dans la conduite 2 et dans les conduites 3 et 4.

Le dispositif selon l'invention s'écarte du dispositif connu correspondant à la description faite jusqu'ici en relation avec la figure 1 par la présence d'un volet déflecteur 10 formant une partie de la paroi 13 de séparation entre les chambres 5 et 6. Le déflecteur 10 peut pivoter autour d'un axe 11 s'étendant le long de la paroi 13 transversalement à la direction d'écoulement de l'air dans le dispositif. Le volet déflecteur 10 est situé en amont de la zone de mixage 8 et s'étend, comme le volet de mixage 9, vers l'amont à partir de son axe de pivotement 11. Dans la position représentée à la figure 1, le déflecteur 10 complète la paroi 13 et ne modifie pas le fonctionnement du dispositif par rapport au fonctionnement connu tel qu'il vient d'être décrit.

Lorsqu'on fait pivoter le déflecteur 10 vers le haut de façon que son extrémité libre 14 pénètre dans la branche de transmission d'air froid 5, comme représenté à la figure 2, il dévie une fraction du flux $F_2$ de la bran che 5 dans la branche 6. La fraction de flux ainsi déviée, représentée en trait plein et désignée par la référence $F'_3$, $F'_4$, se partage en un flux $F'_3$ pénétrant dans la conduite de sortie 3 et un flux $F'_4$ qui passe dans la conduite de sortie 4. Ces flux d'air froid $F'_3$ et $F'_4$ s'ajoutent respectivement aux flux d'air chaud $F'_3$ et $F'_4$ de la figure 1, tandis que seul le flux d'air froid $F_2$, de débit modifié par rapport à celui de la figure 1, arrive dans la conduite de sortie 2. Par rapport à la position de la figure 1, la température de l'air dans la conduite 2 est donc inchangée et son débit modifié, tandis que dans les conduites 3 et 4 la température est abaissée et le débit modifié.

Si au contraire on fait pivoter le déflecteur 10 vers le bas de façon que son extrémité libre 14 pénètre dans la branche 6, une fraction du flux d'air réchauffé $F_3$, $F_4$ est déviée vers la branche 5 sous forme d'un flux $F'_2$ représenté en trait interrompu, qui pénètre dans la conduite de sortie 2 conjointement au flux d'air froid $F_2$ de la figure 1. Les conduites de sortie 3 et 4 reçoivent quant à elles des flux d'air chaud $F_3$ et $F_4$ de débits modifiés par rapport à ceux de la figure 1. La température de l'air est donc augmentée et son débit est modifié également dans la conduite 2, tandis que la température est inchangée et le débit modifié dans les conduites 3 et 4.

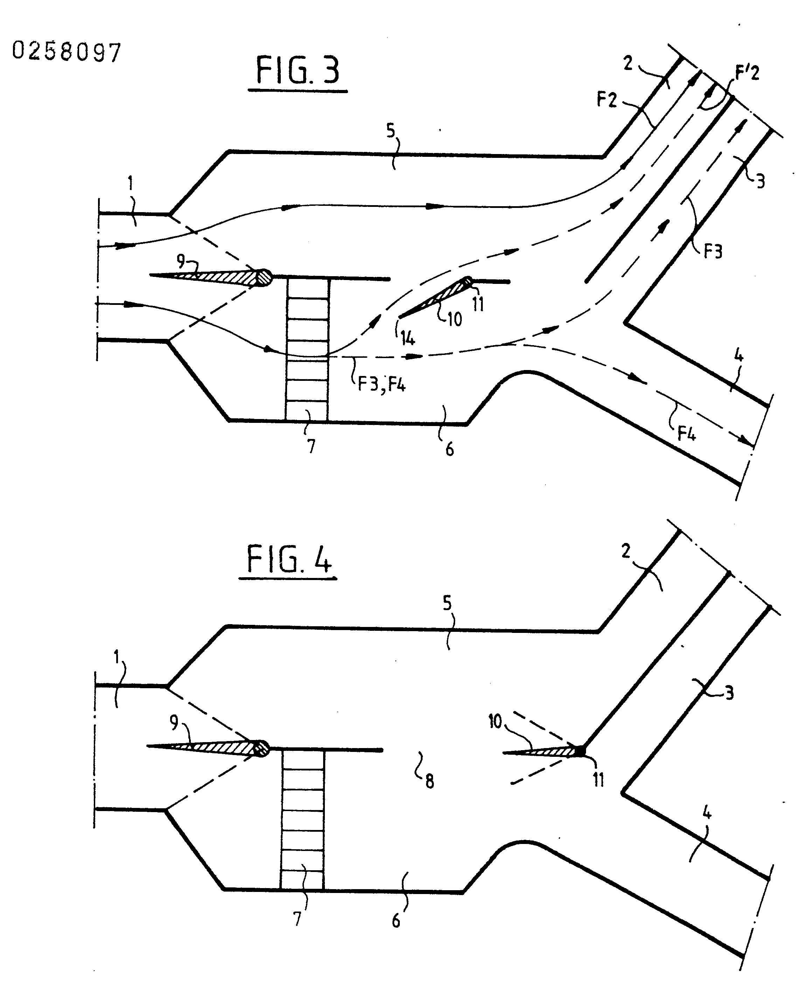

Ainsi, le déflecteur 10 permet, lorsque le volet de mixage 9 est en position "bi-level", d'obtenir soit le même écart de température qu'avec les dispositifs connus entre le circuit d'aération d'une part, le circuit de dégivrage et le circuit de chauffage d'autre part, lorsque le volet déflecteur est dans la position de la figure 1, soit un écart de température plus faible si l'usager le souhaite. Cette diminution de l'écart de température peut être obtenue par un abaissement de la température de l'air de chauffage et de dégivrage (figure 2) ou au contraire par une élévation de la température de l'air aux aérateurs (figure 3). Bien entendu, l'écart de température peut varier sur une plage de réglage continue de part et d'autre de la position correspondant à l'écart maximal.

Les dispositifs représentés aux figures 4 à 6 sont composés des mêmes éléments que celui de la figure 1, désignés par les mêmes signes de référence, et fonctionnent de la même façon. Seuls les emplacements du volet déflecteur 10 et de la zone de mixage 8 varient.

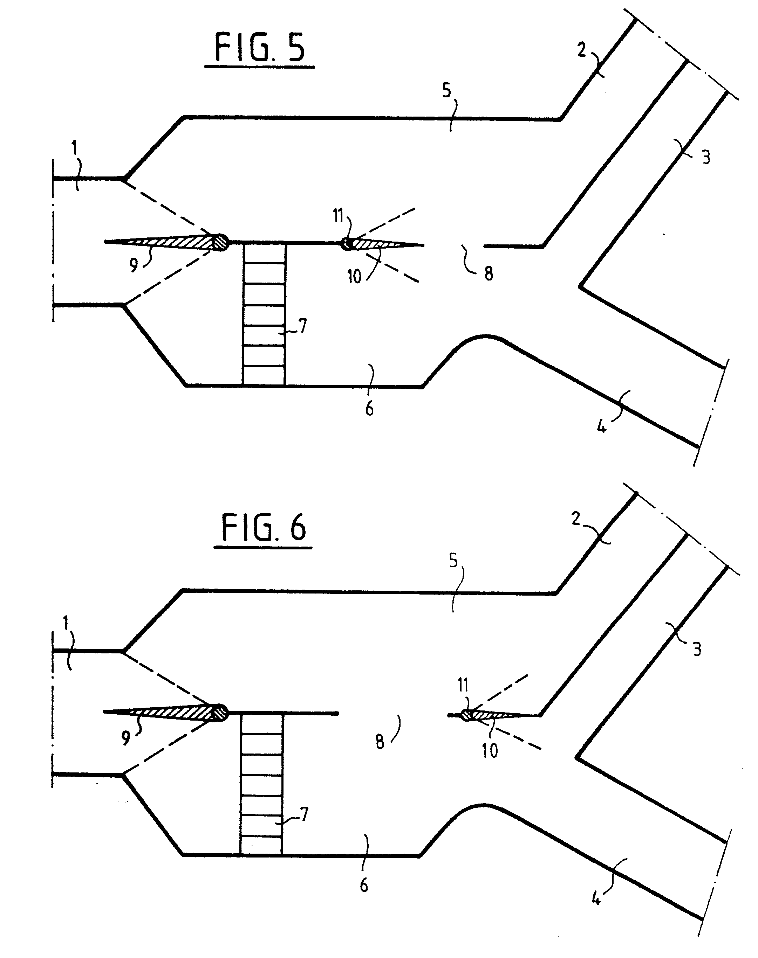

Dans la variante de la figure 4, le volet déflecteur 10 est situé immédiatement en amont des conduites de sortie et s'étend vers l'amont à partir de son axe de pivotement 11, la zone de mixage 8 étant en amont du déflecteur. Dans la variante de la figure 5, le volet déflecteur 10 est en amont de la zone de mixage 8 et s'étend vers l'aval à partir de son axe de pivotement 11. Dans la version de la figure 6, la disposition relative du volet déflecteur 10 et de la zone de mixage 8 est la même que dans la figure 4, mais le déflecteur s'étend vers l'aval à partir de l'axe 11. Dans tous les cas, le volet déflecteur 10 peut pivoter entre une position médiane dans laquelle il s'étend dans le plan de la paroi de séparation 13 entre les branches 5 et 6, position représentée en trait plein pour laquelle l'écart de température entre les conduites de sortie est maximal, et des positions d'écarts de températures minimales représentées en trait interrompu de part et d'autre de la position moyenne. Le déflecteur 10 dévie de l'air froid vers les conduites de sortie 3 et 4 lorsqu'il est orienté de la branche 5 vers la branche 6 d'amont en aval, et dévie au contraire de l'air chaud vers la conduite de sortie 2 lorsqu'il est orienté de la branche 6 vers la branche 5 d'amont en aval.

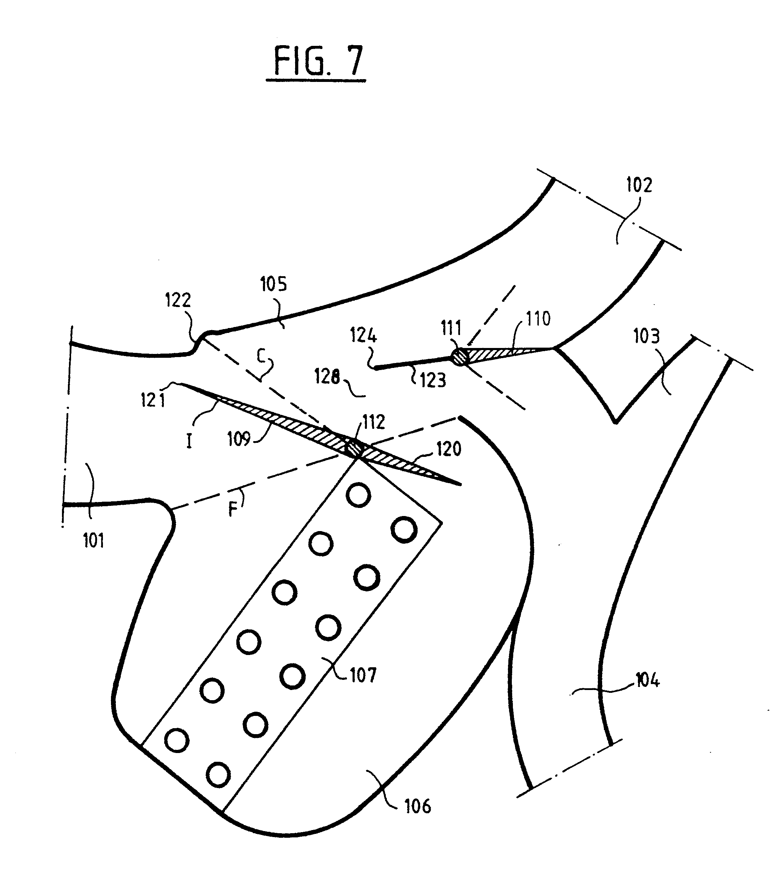

La figure 7 représente une configuration géométrique avantageuse d'un dispositif dans lequel la disposition du volet déflecteur est semblable à celle montrée à la figure 6.

On retrouve à la figure 7 une conduite d'entrée 101, des conduites de sortie 102, 103 et 104, une branche de transmission d'air froid 105, une branche de réchauffage d'air 106, un radiateur 107, un volet de mixage 109 pouvant pivoter autour d'un axe 112 et un volet déflecteur 110 pouvant pivoter autour d'un axe 111, ces numéros de référence étant obtenus des éléments correspondants de la figure 1.

La branche de réchauffage d'air 106 a ici une configuration en U tandis que la branche de transmission d'air froid 105 relie directement les extrémités du U et est par conséquent sensiblement plus courte que la branche 106. Ceci tient compte du fait que les fonctions de chauffage et d'aération nécessitent un débit d'air chaud sensiblement plus faible que le débit d'air froid. La perte de charge due à l'allongement de la branche 106 s'ajoute à celle due à la présence du radiateur 107 pour conduire à l'équilibre désiré entre les débits d'air froid et d'air réchauffé. La paroi plane 13 séparant les branches 5 et 6 du dispositif de la figure 1 est remplacée ici par un élément de paroi 123 s'étendant vers l'amont à partir de l'axe 111 du déflecteur 110, complété, pour définir les branches 105 et 106, par ce volet déflecteur et par le volet de mixage 109 dont l'axe 112 est extérieur au plan de la paroi 123. Le volet de mixage 109 présente, au-delà de son axe 112, un prolongement 120 qui, lorsque ce volet est dans la position F de fermeture de la branche de réchauffage d'air, représentée en trait interrompu, obture l'extrémité aval de la branche en U 106 tandis que le volet 109 lui-même obture l'extrémité amont de cette même branche. Cette disposition évite un échauffement parasite de l'air par turbulence dans la partie aval de la branche 106 lorsque l'usager ne désire pas d'air chaud.

Au voisinage de sa position C de fermeture de la branche de transmission d'air froid 105, représentée en trait interrompu, l'extrémité libre 121 du volet de mixage 109 coopère avec une portion de paroi 122 de la conduite d'entrée s'étendant à peu près circonférentiellement par rapport au pivotement de ce volet. Ceci assure une ouverture très progressive de la branche 105 lorsque le volet quitte la position C et évite un afflux trop brusque d'air froid dans les conduites de sortie, qui serait désagréable pour les usagers. La position intermédiaire I, dite "bi-level" ou stratification de température, du volet de mixage 109 est plus proche de la position C que de la position F. Une zone de mixage 128 est définie entre l'extrémité 124, opposée à l'axe 111, de la paroi 123, et l'axe 112 adjacent au radiateur 107.

Le fonctionnement du volet déflecteur 110 et le résultat qu'il produit sont les mêmes que ceux du volet 10 tels que décrits en relation avec les figures 1 à 3, en tenant compte du fait que la disposition du volet 110 est celle du volet 10 de la figure 6.

**Revendications**

1.- Dispositif d'aération et de chauffage par air chaud, du type comprenant :
- und conduite d'entrée d'air froid (1);
- au moins une première conduite de sortie (2) d'air et une seconde conduite de sortie d'air (3,4);
- une branche de transmission d'air froid (5) interposée entre la conduite d'entrée et les conduites de sortie;
- une branche de réchauffage d'air (6) interposée entre la conduite d'entrée et les conduites de sortie et contenant un échangeur de chaleur (7), la branche de transmission d'air froid et la branche de réchauffage d'air communiquant entre elles par une zone de mixage (8); et
- un volet de mixage (9) disposé à la jonction de la conduite d'entrée et des branches de transmission d'air froid et de réchauffage d'air pour faire varier la répartition entre ces deux branches du débit d'air arrivant par la conduite d'entrée et par conséquent la température de l'air sortant par les conduites de sortie, l'air froid passant par la branche de transmission et l'air réchauffé dans la branche de réchauffage d'air étant pour au moins une position intermédiaire (I) du volet de mixage dirigés préférentiellement vers la première conduite de sortie et vers la seconde conduite de sortie respectivement de façon à établir une différence de température de l'air entre ces deux conduites, caractérisé en ce qu'il comprend en outre un déflecteur (10) situé au voisinage de la jonction entre les branches de transmission d'air froid et de réchauffage d'air et les conduites de sortie et au voisinage de la zone de mixage, et dont le déplacement permet, lorsque le volet de mixage et dans ladite position intermédiaire, de faire passer un débit réglable d'air de la branche de transmission d'air froid à la seconde conduite de sortie et/ou de la branche de réchauffage d'air à la première conduite de sortie.

2.- Dispositif selon la revendication 1, caractérisé en ce que le volet de mixage se déplace entre une position (C) de fermeture de la branche de transmission d'air froid permettant d'envoyer de l'air plus chaud dans les conduites de sortie et une position (F) de fermeture de la branche de réchauffage d'air permettant d'envoyer de l'air plus froid dans les conduites de sortie.

3.- Dispositif selon l'une des revendications 1 et 2, caractérisé en ce que le déflecteur est un volet pivotant autour d'un axe (11) transversal à la direction générale de l'écoulement de l'air dans le dispositif.

4.- Dispositif selon la revendication 3, caractérisé en ce que le volet déflecteur s'étend vers l'aval à partir de son axe de pivotement.

5.- Dispositif selon la revendication 3, caractérisé en ce que le volet déflecteur s'étend vers l'amont à partir de son axe de pivotement.

6.- Dispositif selon l'une des revendications précédentes, caractérisé en ce que le déflecteur est placé en aval de la zone de mixage.

7.- Dispositif selon l'une des revendications 1 à 5, caractérisé en ce que le déflecteur est placé en amont de la zone de mixage.

8.- Dispositif selon l'une des revendications précédentes, caractérisé en ce que la branche de réchauffage d'air (106) présente une configuration en U et que la branche de transmission d'air froid (105) s'étend de façon directe entre les extrémités de U.

9.- Dispositif selon la revendication 8, caractérisé en ce que le volet de mixage (109) pivote autour d'un axe (112) adjacent à l'échangeur de chaleur (107) et se prolonge (120) au-delà de cet axe de façon à obturer également l'extrémité aval de la branche en U dans la position (F) de fermeture de la branche de réchauffage d'air.

10.- Dispositif selon la revendication 9, caractérisé en ce que le volet de mixage coopère, au voisinage de sa position de fermeture de la branche de transmission d'air froid, avec une portion de paroi (122) de la conduite d'entrée s'étendant à peu près circonférentiellement par rapport au pivotement de ce volet.

0258097

# FIG.1

# FIG.2

0258097

## FIG. 3

## FIG. 4

0258097

FIG. 5

FIG. 6

0258097

# FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | FR-A-2 491 839 (SÜDDEUTSCHE KUHLERFABRIK JULIUS BEHR) <br> * En entier * | 1-4,6 8,9 | B 60 H 1/00 |
| | --- | | |
| A | US-A-4 440 212 (NISSAN MOTOR CO.) <br> * Abrégé * | 1-3,5, 7 | |
| | ----- | | |

DOMAINES TECHNIQUES RECHERCHES (Int. Cl.4)

B 60 H

Le présent rapport de recherche a été établi pour toutes les revendications

| Lieu de la recherche | Date d'achèvement de la recherche | Examinateur |
|---|---|---|
| LA HAYE | 09-11-1987 | VAN GESTEL H.M. |